# EUROPEAN PATENT SPECIFICATION

(11) **EP 1 391 628 B1**
(45) Date of publication and mention of the grant of the patent: **16.12.2009**
(21) Application number: 03254755.6
(22) Date of filing: 30.07.2003
(51) Int. Cl.: F16D 65/092, F16D 55/226

(54) **Brake pad and brake caliper for disc brakes**
Bremsbelag und Bremssattel für Scheibenbremsen
Garniture de frein et étrier de frein pour frein à disque

(30) Priority: 06.08.2002 GB 0218165
(43) Date of publication of application: 25.02.2004
(73) Proprietor: Meritor Heavy Vehicle Braking Systems (UK) Limited, Cwmbran, Gwent NP44 3XU (GB)
(72) Inventor: Roberts, Paul, Newport, NP20 5QU (GB); Thomas, Paul Anthony, Newport, NP26 3AY (GB); Williams, Anthony John, Garndiffaitch Gwent, NP4 8QE (GB); McCann, Denis John, Rochester Hills Michigan 48309 (US); Heinlein, Carl Edward, Shropshire TF13 6NL (GB)
(74) Representative: Jones, John Bryn

(56) References cited:
- DE-A- 3 317 980
- DE-A- 10 011 778
- DE-B- 1 258 210
- US-A- 3 977 498

## Description

The present invention relates to brake pad backplates, brake pads and brake calipers, particularly for use in heavy road vehicles.

Brake calipers are known which force brake pads towards a brake disc so as to effect braking of the disc. The brake pads consist of a brake pad backplate, typically stamped from sheet steel, onto which is fixed friction material. The friction material is forced into engagement with the brake disc to effect the braking and progressively wears out through the life of the brake pad. Once the brake pads have worn out, they are removed (with the brake disc and brake caliper in situe) by withdrawing the pads in a radially outward direction when considering the brake disc. Prior to removal of the worn brake pads, various retaining features, such as pad springs and pad retainers have to be removed.

Additionally the brake caliper will include a housing on one side of the brake disc in which is mounted one or more pistons. A bridge is fixed to the housing (or is integral therewith) and which straddles the brake disc in order to support a further brake pad on the opposite side of the brake disc.

The housing and bridge together are known as a brake caliper frame.

The brake caliper frame is slidably mounted on a brake carrier, which in turn is non rotatably mounted on suspension components adjacent to the brake disc.

An object of the present invention is to provide an improved form of brake caliper.

Thus according to the present invention there is provided a brake caliper as defined in the accompanying independent claim.

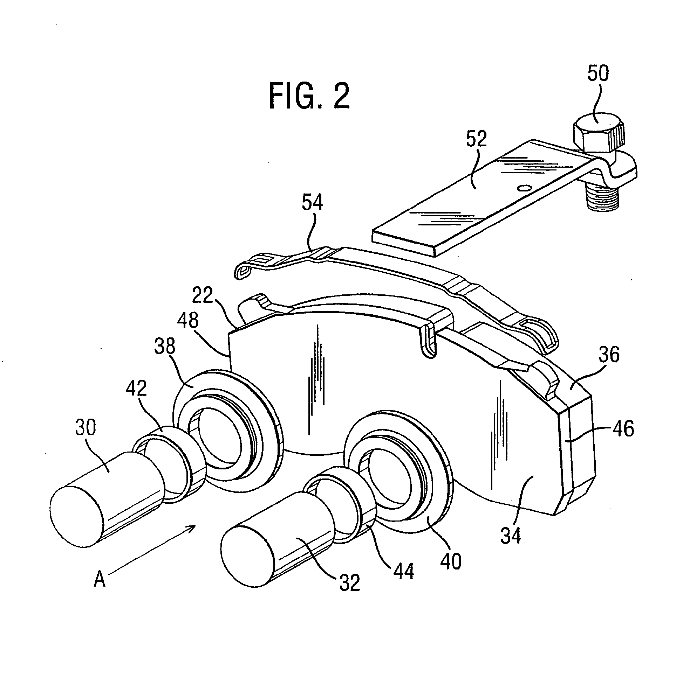

Advantageously, by releasably securing the brake pad to the piston and the further brake pad to the dummy piston, then it is not necessary to provide any other means of retaining the pads in the caliper. In particular, it is not necessary to provide a pad strap retainer such as is shown in figure 2. Nor is the bolt and associated machining required.

During servicing of the caliper, the old worn brake pads are removed from the caliper in a radially outward direction. Clearly the pads must be prevented from escaping from the caliper when the vehicle is in use. One known way of retaining the pads is to provide a pad retaining strap and bolt (as shown in figure 2). By providing an alternative arrangement for pad retention by utilising features of the piston and brake pad, this simplifies the process for retaining the pad in the caliper since a pad retaining strap and an associated bolt are no longer required.

UK patent application GB2303891 shows a brake piston capable of applying a force to a brake pad to apply a brake. However, in this prior art the piston is a loose fit in a recess of the backplate of the brake pad. The piston is not attached to the brake pad. As such, this design will require additional features (not shown) to retain the pad in the caliper.

DE3317980 also shows a disc brake assembly with a brake caliper according to the preamble of claim 1. However, in this arrangement an annular spring is used to connect a piston to a pressure plate which contacts the brake pad.

The invention will now be described, by way of example only, with reference to the accompanying drawings in which:-
Figure 1 is in isometric view of a known caliper,
Figure 2 is an exploded view of parts of the caliper assembly of figure 1,
Figure 3 is an isometric view of a brake caliper according to the present invention,
Figure 4 is a cross section view of the brake pad backplate of figure 3,
Figure 5 is an enlarged cross section view of part of the piston and backplate of figure 3,
Figure 6 is an alternative method of securing a piston and backplate of the present invention,
Figures 7 to 9 show a yet further method of securing a piston to a backplate of the present invention, and
Figure 10 shows an exploded view of a piston/piston head subassembly according to a further aspect of the present invention.
Figure 11 shows a schematic cross-section view of a caliper according to the present invention.

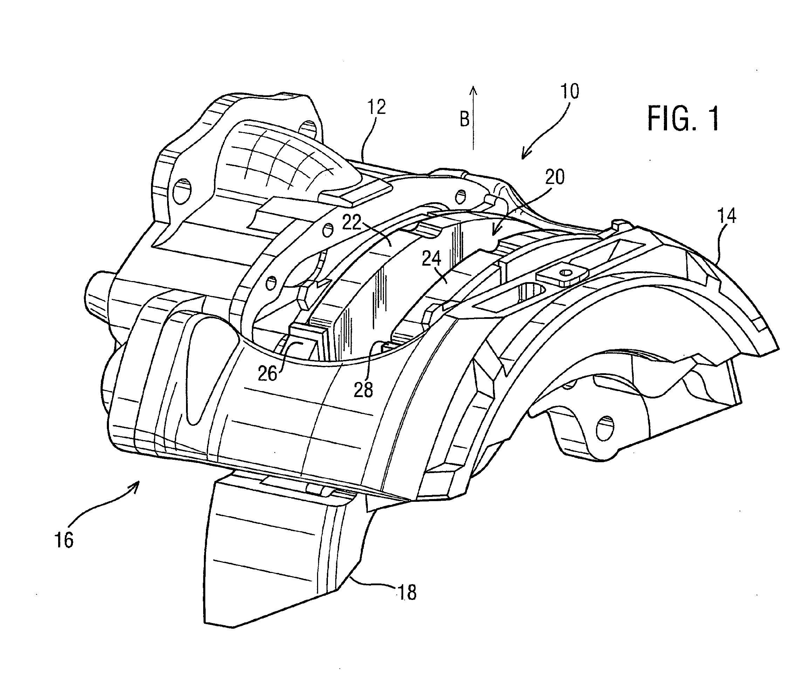

Figures 1 and 2 show a known brake caliper 10 having a housing 12 and a bridge 14 which together provide a frame 16. In this case the housing 12 and bridge 14 are individual components, bolted together, though in further embodiments the housing and bridge can be integrally formed as a single component. The frame is slidably mounted on a brake carrier 18 which is non rotatably fixed to suspension components of an associated vehicle (not shown).

The frame 16 includes an aperture 20 which defines a disc brake plane. Mounted within aperture 20 are inner brake pad 22 and outer brake pad 24. Inner brake pad 22 is circumferentially positioned between two inner carrier abutments 26 (only one of which is shown).

Outer brake pad 24 is similarly positioned between two outer carrier abutments 28 (only one of which is shown).

Two pistons 30 and 32 are mounted in housing 12 and are actuated by an actuator (not shown) so as to force inner brake pad 22 in the direction of arrow A of figure 2. This causes pad 22 to move towards the brake disc, and the reaction load of the actuator acts on the frame to cause the frame to move pad 24 towards the brake disc, thus producing a braking torque on the disc. Brake pad 22 and 24 are identical and include a brake pad backplate 34 and friction material 36.

Backplate 34 is stamped from 8mm thick sheet steel.

When the pistons are actuated to apply the brake, they act through a piston head 38 and 40 which acts to distribute the piston force across a larger area of the backplate 34.

Piston heads 38 and 40 are retained on respective pistons 30 and 32 by retaining rings 42 and 44. It should be noted that the piston heads are required since, without them, the piston would apply very localised forces to small regions of the backplate which in turn would cause uneven wear of the friction material due to flexing of the backplate in use.

Furthermore, it should be noted that the circumferential ends 46 and 48 of the backplate engage the inner carrier abutments 26 of carrier 18 so as to transfer brake torque loads to the vehicle suspension. As the brake pads wear circumferential ends 46 and 48 move progressively towards the brake disc, progressively sliding along inner carrier abutments 26. Clearly the inner carrier abutment 26 is spaced from the outer carrier abutment 28 by slightly greater than the thickness of the brake disc, to allow the brake disc to sit therebetween. Thus, there is a gap between the edge of the brake disc and the edge of the inner carrier abutment, and a similar gap between the edge of the brake disc and the edge of the outer carrier abutment. As the brake disc wears this gap increases and the thickness of the backplate 34 must be sufficient so as to ensure sufficient engagement of the backplate with the inner or outer carrier abutment when the friction material is fully worn and the brake disc has worn to its working limit.

Once the brake pads are worn, the retaining bolt 50 is unscrewed allowing removal of the pad retainer 52. The worn pads 22 and 24 can then be withdrawn from aperture 20 in the direction of arrow B of figure 1 (i.e. generally upwardly when viewing the figure) clear together with the pad springs 54.

The pistons can then be wound back into the housing and the frame repositioned relative to the brake disc such that new pads can be inserted and secured in place with the pad retainer and bolt.

It would be appreciated that the pads are withdrawn generally radially outwardly and are replaced by inserting them into the aperture in a generally radially inwardly direction.

The pad springs 54 provide for a limited amount of movement of the brake pad in a plane parallel to the disc brake plane. In particular, one of the functions of the pad spring is to reduce noise in the form of rattling of the brake pad.

The friction material can be glued to the backplate, though under certain circumstances a more positive form of location is required to ensure sufficient shear strength at the backplate/friction material joint. Typically, the brake backplate may have holes drilled or stamped in it or a separate steel mesh may be welded to the friction material side of the backplate to receive friction material and hence increase the shear strength.

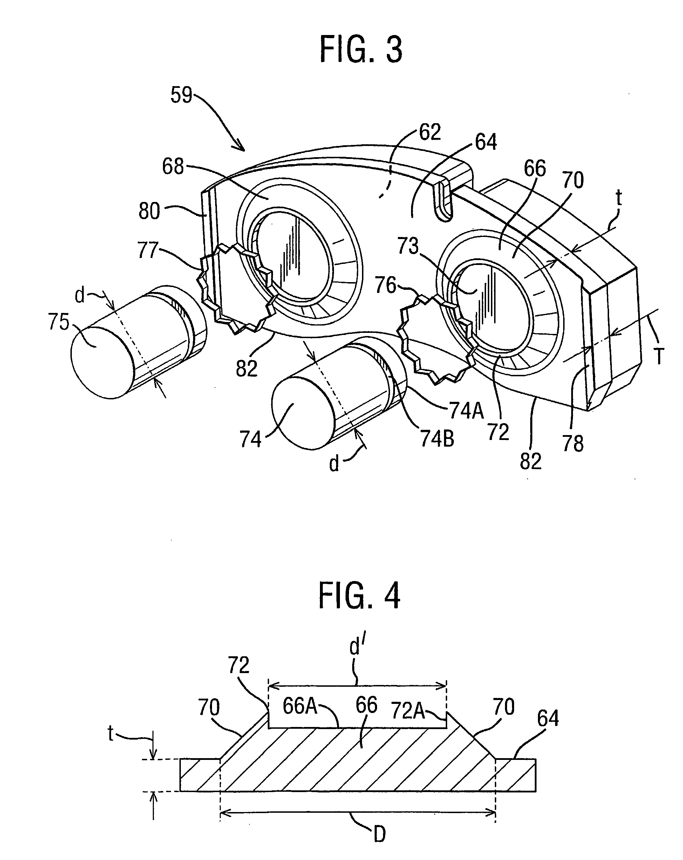

Figure 3 and 4 shows a brake pad 59 having brake pad backplate 60 which is generally planar and having a frictional material surface 62 on one side and a loading face 64 on an opposite side. The loading face includes two local load spreading features in the form of raised bosses 66 and 68 both being identical. It should be noted that the top of the boss (when considering figure 4) has diameter d' which is smaller than the diameter D of the lower portion of the boss. Thus the boss is able to act as a load spreading feature.

Boss 66 is circular having an edge 70 that tapers towards the loading face 64.

Boss 66 further includes a location feature in the form of a raised abutment 72. Abutment 72 is annular and has a diameter d' that is slightly larger than the diameter d of the end 74A of piston 74.

Piston 74 and 75 are both of substantially uniform circular cross section having diameter d.

End 74A (also known as a piston feature) of piston 74 includes an annular groove 74B. A resilient means in the form of a wavy spring 76 is assembled into groove 74B. The piston and wavy spring are then inserted into the recess 73 formed by surface 66A and raised abutment 72. This assembly process can either be achieved by moving the pad towards the piston, or alternatively by moving the piston towards the pad as will be further described below.

The wavy spring 76 is designed as an interference push fit in recess 73, and hence the wavy spring ensures that end 74A of the piston remains in contact with surface 66A when the associated vehicle is in use. In this way the brake pad is positively attached to the piston in a releasable manner. The interference push fit ensures that the brake pad cannot inadvertently fall out or bounce out of the caliper in use, even if there is excessive pad to rotor clearance, such as might occur when an associated brake adjuster fails to adjust the brakes following wear, or as might occur with a partially failed wheel bearing resulting in excessive wobble of the brake disc thereby knocking back the pad and piston into the caliper excessively. In particular a pad retainer (such as is shown in figure 2) is not required. It will be appreciated that it is possible to design a caliper whereby the attachment of the brake pad to the piston is the sole means of preventing the brake pad inadvertently falling out or bouncing out of the caliper in use.

In addition to providing an interference push fit, the wavy spring also allows a limited amount of radial movement of the brake pad relative to the piston. In particular the resilient use of the wavy spring can be used to prevent pad rattle. Thus in some applications the wavy springs 76 and 77 fulfil the function of the pad spring 54 of the prior art.

Note that the wavy spring 76 is similar to proprietary components known as "tolerance rings". Thus, under certain circumstances it would be possible to design the piston and brake pad backplate to utilise "off the shelf" tolerance rings, rather than having a specific unique wavy spring.

Backplate 60 is generally arcuate having circumferential ends 78 and 80. Circumferential ends 78 and 80 are locally thickened (T) when compared with the thickness (t) of the main portion of the backplate. This local thickening ensures that there is adequate engagement of the circumferential end with its associated carrier abutment even at the extremes of pad and disc wear.

Similar local thickening (not shown) can be provided on a radially inner edge 82 of the backplate 60, where it abuts the associated caliper.

If necessary one or more holes can be provided to receive friction material. Alternatively, or additionally the friction material surface 62 of the backplate 60 can be provided with recesses, in particular in the form of mesh, to improve the shear strength of the friction material/backplate joint.

In view of the above various features mentioned in relation to a brake pad backplate according to the present invention, it can be seen that there are several additional features when compared to known brake pad backplates stamped from sheet steel. Thus, whilst it is possible to machine various features from a solid backplate, or alternatively fabricate the components, it is particularly advantageous to provide some or all of these features integrally with a cast backplate, preferably cast from iron or steel.

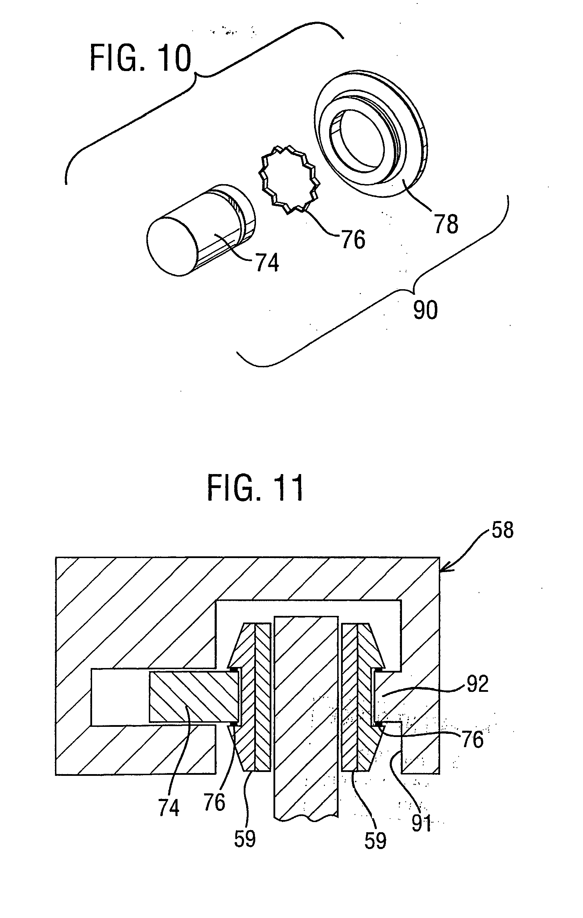

The inventive brake pad backplate 60 has been described in relation to a piston of an associated caliper 58 (see figure 11). Such a caliper can be generally similar to caliper 10 and would be designed to accommodate two identical brake pads according to the present invention and in particular where the outer brake pad (i.e. the brake pad on the opposite side of the brake rotor to the piston) rests against the inner surface 91 of the caliper bridge, the caliper bridge can include formations which allow the brake pad to be releasably attached to the caliper. Thus, typically the inner surface of the bridge might include two annular projections 92 (only one shown on figure 11), each projection having a diameter equivalent to pistons 75 and 74, and being spaced apart by a distance equivalent to the spacing of pistons 75 and 74. Thus, it can be seen that these projections (also known as dummy piston features) are mirror images of the shape of the ends of pistons 74 and 75.

It should be noted that to remove the inner and outer brake pads 22 and 24 of the prior art shown in figure 2 for example during servicing, they can be simply removed in a radial direction relative to the brake disc once the bolt and pad retainer have been removed.

However, the present invention provides for a novel method of assembling brake pad backplates either during initial assembly or during re-assembly following servicing. Thus, in order to assemble brake pad backplate 60 in the outer position of the caliper, i.e. into the position equivalent to pad 24 of figure 1, the pad has to be inserted in a radial direction and then subsequently moved in an axial direction, away from the brake disc, so as to engage the location of features of the backplate with further features (dummy piston features) on the inner face of the bridge, thereby, simultaneously fitting the brake pad and attaching the brake pad to the dummy piston feature.

Similarly when backplate 60 assembles in an inner position, i.e. in a position equivalent to pad 22 of figure 1, it has to be first moved in a radially inward direction then in an axial direction away from the brake disc so that the location features of the backplate engage with the pistons, thereby simultaneously fitting the brake pad and attaching the brake pad to the piston.

An alternative method of assembling the backplate 60 into a caliper is to firstly move the backplates in a radial direction such that the friction material is proximate the brake disc surface, and then to apply the brake so that the piston and the inner face of the bridge approach and engage with location features on the backplate thereby preventing escape of the pads during subsequent normal use of the vehicle.

Thus, the inventive method of assembly of the present invention is to provide axial movement of the backplate relative to the piston or relative to the bridge as appropriate in order to engage the location feature to prevent the escape of the backplate from the caliper during subsequent normal use of the vehicle.

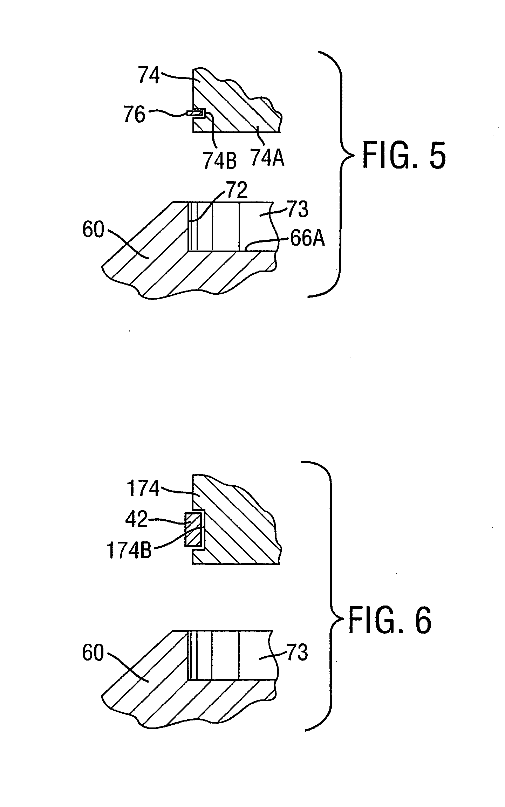

Figure 6 shows an alternative piston 174 including a larger groove 174B designed to accommodate the retaining ring 42. This piston and retaining ring subassembly can be assembled onto the backplate 60 according to the present invention. In this case the retaining ring 42 is an interference fit with the recess 73 of backplate 60.

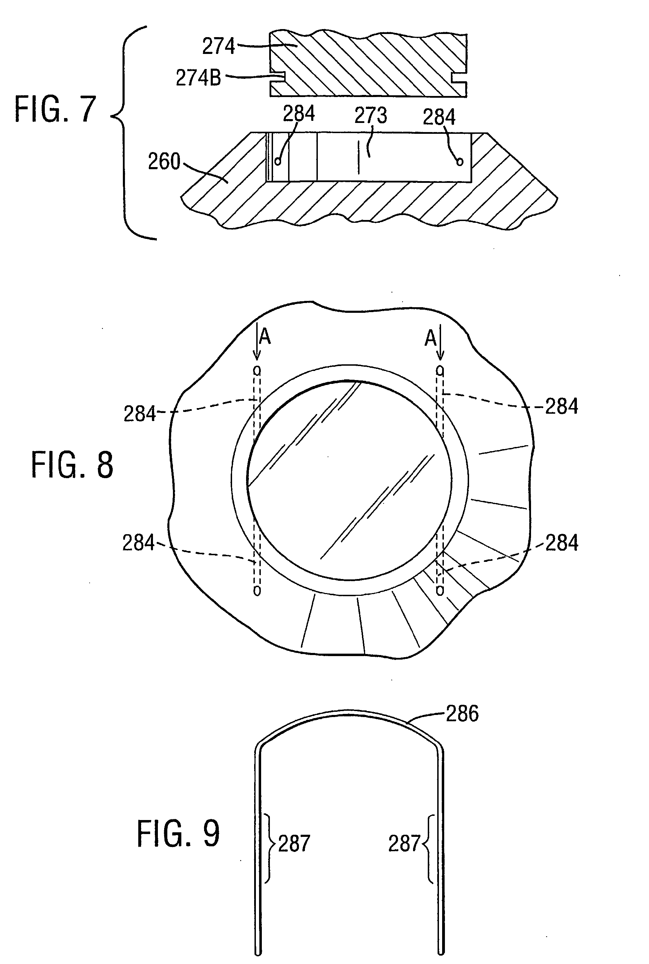

Consideration of figures 7 to 9 show an alternative piston 274 having a groove 274B. An alternative brake pad backplate 260 is provided which in this case includes cordially orientated holes 284. In this case the piston 274 is inserted into recess 273 following which the spring clip 286 is inserted in the direction of arrows A through holes 284 such that regions 287 sit within groove 274B, thus retaining the piston to the pad.

In further embodiments a single pin could be used. Such a single pin could be radially or cordially orientated relative to the piston. The pin could be arranged to fit in a hole of the piston, rather than in a circumferential groove of the piston.

Figure 3 shows a piston feature (the piston end) in the form of a projection, which engages in a recess of the brake pad backplate. In further embodiments, a projection on the brake pad backplate could be arranged to engage a recess in the piston.

It will be appreciated that wavy springs 76 and 77 act as retaining features to retain the pad to the piston. Similarly retaining ring 42 when used as shown in figure 6 acts as a retaining feature. Again, spring clip 286 acts as a retaining feature.

When a set of brake pads according to the present invention have been worn out through use, then a brake pad kit will be purchased in order to replace the worn brake pads. This kit might typically include a set of brake pads, along with appropriate retaining features, i.e. a set of wavy springs 76, or a set of retaining rings 42, or a set of spring clips 286.

The invention has been hereinbefore described in relation to a novel and inventive brake caliper. However, the applicant has also recognised a further invention in that the wavy spring 76 can be used to attach a piston 74 to the known piston head 38 to provide a piston/piston head sub assembly 90 (see figure 10). This sub assembly can be used in the prior art calipers with the prior art brake pad backplates 34. In particular the wavy spring 76 provides an additional anti rattle feature.

In this case the wavy spring is received in groove 74B of piston 74. In an alternative embodiment the piston head 38 could be provided with an internal groove to receive wavy spring 76, and thus piston 74 would not require the groove 74B.

It would be appreciated that, in a similar manner, the grooves of piston 74 and 75 as shown in figure 3 could be transferred to the corresponding recesses on the brake backplate 60.

## Claims

1. A brake caliper (58) including a brake pad (59) having a backplate (60) with a friction material attached to one side and having a loading face (64) on an opposite side, the caliper further including a piston (74, 75) for applying a force to the loading face, in which the brake pad is releasably attached to the piston, and in which the brake pad includes a location feature (72) which, in use, cooperates with a piston feature (74A) of the piston to locate the brake pad relative to the piston and to releasably attach the brake pad to the piston, the brake caliper further including a bridge defining a brake disc plane and a further brake pad (59) having a back plate with a friction material attached to one side and having a loading face on an opposite side, **characterised in that** the further brake pad includes a further location feature (72) substantially identical to the location feature, the caliper including a dummy piston feature (92) substantially identical to the piston feature, in which, in use, the further location feature cooperates with the dummy piston feature to locate the further brake pad relative to the caliper and to releasably attach the brake pad to the caliper.

2. A brake caliper as defined in claim 1 in which the piston feature is one of a projection and recess and the location feature is the other of a projection and recess.

3. A brake caliper as defined in any preceding claim in which a resilient means (76, 42) acts between the piston and the brake pad to releasably attach the brake pad to the piston.

4. A brake caliper as defmed in claim 3 in which the resilient means permits limited movement of the brake pad in a plane of the brake pad relative to the piston.

5. A brake caliper as defined in claim 3 or 4 when dependent upon claim 2 in which the resilient means is a push fit on the projection and/or in the recess.

6. A brake caliper as defined in claim 5 in which the resilient means is a push fit on the projection or in the recess and is mounted in a groove of the other of the projection or recess.

7. A brake caliper as defined in claim 3 or any one of claims 4 to 6 when dependent upon claim 3 in which the resilient means is a wavy spring (76).

8. A brake caliper as defined in claim 1 or 2 in which the brake pad is releasably attached to the piston by a pin engaging the brake pad and piston and being radially or cordially orientated relative to the piston.

9. A brake caliper as defined in claim 8 in which the pin is cordially orientated relative to the piston and engages a circumferential groove in the piston.

10. A brake caliper as defined in any preceding claim in which a resilient means acts between the caliper and the further brake pad to releasably attach the further brake pad to the caliper.

11. A brake caliper as defined in any preceding claim in which the further brake pad is releasably attached to the caliper by a pin engaging the brake pad and dummy piston feature and being radially or cordially orientated relative to the dummy piston feature.

12. A brake caliper as defined in any preceding claim including a further piston (75) in which the brake pad is releasably attached to the further piston.

13. A brake caliper as defined in claim 12 in which a further brake pad is releasably attached to a further dummy piston feature.

## Patentansprüche

1. Bremssattel (58), der einen Bremsbelag (59) mit Trägerplatte (60) enthält, die ein an einer Seite befestigtes Reibmaterial und eine Belastungsfläche (64) auf einer gegenüberliegenden Seite aufweist, wobei der Sattel weiterhin einen Kolben (74, 75) zum Anlegen einer Kraft an die Belastungsfläche enthält, wobei der Bremsbelag lösbar an dem Kolben befestigt ist und wobei der Bremsbelag ein Positioniermerkmal (72) enthält, das im Gebrauch mit einem Kolbenmerkmal (74A) des Kolbens zusammenwirkt, um den Bremsbelag bezüglich des Kolbens anzuordnen und den Bremsbelag lösbar an dem Kolben zu befestigen, wobei der Bremssattel weiterhin eine Brücke, die eine Bremsscheibenebene definiert, und einen weiteren Bremsbelag (59) mit einer Trägerplatte definiert, die ein an einer Seite befestigtes Reibmaterial und eine Belastungsfläche auf einer gegenüberliegenden Seite aufweist, **dadurch gekennzeichnet, dass** der weitere Bremsbelag ein weiteres Positioniermerkmal (72) enthält, das mit dem Positioniermerkmal im Wesentlichen identisch ist, wobei der Sattel ein Blindkolbenmerkmal (92) enthält, das mit dem Kolbenmerkmal im Wesentlichen identisch ist, wobei das weitere Positioniermerkmal im Gebrauch mit dem Blindkolbenmerkmal zusammenwirkt, um den weiteren Bremsbelag bezüglich des Sattels anzuordnen und den Bremsbelag lösbar an dem Sattel zu befestigen.

2. Bremssattel nach Anspruch 1, wobei das Kolbenmerkmal ein Vorsprung oder eine Aussparung ist und das Positioniermerkmal das jeweils andere Element, eine Aussparung oder ein Vorsprung, ist.

3. Bremssattel nach einem vorhergehenden Anspruch, wobei ein elastisches Mittel (76, 42) zwischen dem Kolben und dem Bremsbelag wirkt, um den Bremsbelag lösbar an dem Kolben zu befestigen.

4. Bremssattel nach Anspruch 3, wobei das elastische Mittel eine begrenzte Bewegung des Bremsbelags in einer Ebene des Bremsbelags bezüglich des Kolbens gestattet.

5. Bremssattel nach Anspruch 3 oder 4, wenn von Anspruch 2 abhängig, wobei das elastische Mittel eine Schiebepassung an dem Vorsprung und/oder in der Aussparung ist.

6. Bremssattel nach Anspruch 5, wobei das elastische Mittel eine Schiebepassung an dem Vorsprung oder in der Aussparung ist und in einer Nut des jeweils anderen Elements, der Aussparung oder des Vorsprungs, angebracht ist.

7. Bremssattel nach Anspruch 3 oder einem der Ansprüche 4 bis 6, wenn von Anspruch 3 abhängig, wobei das elastische Mittel eine Wellenfeder (76) ist.

8. Bremssattel nach Anspruch 1 oder 2, wobei der Bremsbelag durch einen Stift, der den Bremsbelag und den Kolben in Eingriff nimmt und bezüglich des Kolbens radial oder entlang der Sehne ausgerichtet ist, lösbar an dem Kolben befestigt ist.

9. Bremssattel nach Anspruch 8, wobei der Stift bezüglich des Kolbens entlang der Sehne ausgerichtet ist und eine Umfangsnut in dem Kolben in Eingriff nimmt.

10. Bremssattel nach einem vorhergehenden Anspruch, wobei ein elastisches Mittel zwischen dem Sattel und dem weiteren Bremsbelag wirkt, um den weiteren Bremsbelag an dem Sattel lösbar zu befestigen.

11. Bremssattel nach einem vorhergehenden Anspruch, wobei der weitere Bremsbelag durch einen Stift, der den Bremsbelag und das Blindkolbenmerkmal in Eingriff nimmt und bezüglich des Blindkolbenmerkmals radial oder entlang der Sehne ausgerichtet ist, lösbar an dem Sattel befestigt ist.

12. Bremssattel nach einem vorhergehenden Anspruch, der einen weiteren Kolben (75) enthält, wobei der Bremsbelag an dem weiteren Kolben lösbar befestigt ist.

13. Bremssattel nach Anspruch 12, wobei ein weiterer Bremsbelag an einem weiteren Blindkolbenmerkmal lösbar befestigt ist.

## Revendications

1. Etrier de frein (58) comportant une garniture de frein (59) ayant une plaque de base (60) avec un matériau de friction attaché d'un côté et ayant une face de chargement (64) sur un côté opposé, l'étrier comportant en outre un piston (74, 75) pour appliquer une force sur la face de chargement, la garniture de frein étant attachée de manière amovible au piston et la garniture de frein comportant un organe de localisation (72) qui, pendant l'utilisation, coopère avec un organe de piston (74A) du piston pour localiser la garniture de frein par rapport au piston et pour attacher de manière amovible la garniture de frein au piston, l'étrier de frein comportant en outre un pont définissant un plan de disque de frein et une garniture de frein supplémentaire (59) ayant une plaque de base avec un matériau de friction attaché d'un côté et ayant une face de chargement sur un côté opposé, **caractérisé en ce que** la garniture de frein supplémentaire comporte un organe de localisation supplémentaire (72) substantiellement identique à l'organe de localisation, l'étrier comprenant un organe de faux-piston (92) substantiellement identique à l'organe de piston, l'organe de localisation supplémentaire, pendant l'utilisation, coopérant avec l'organe de faux-piston pour localiser la garniture de frein supplémentaire par rapport à l'étrier et pour attacher de manière amovible la garniture de frein à l'étrier.

2. Etrier de frein selon la revendication 1, dans lequel l'organe de piston est une projection ou un retrait, et l'organe de localisation est l'autre de la projection ou du retrait.

3. Etrier de frein selon l'une quelconque des revendications précédentes, dans lequel un moyen élastique (76, 42) agit entre le piston et la garniture de frein pour attacher de manière amovible la garniture de frein au piston.

4. Etrier de frein selon la revendication 3, dans lequel le moyen élastique permet un mouvement limité de la garniture de frein dans un plan de la garniture de frein par rapport au piston.

5. Etrier de frein selon la revendication 3 ou 4 lorsqu'elles dépendent de la revendication 2, dans lequel le moyen élastique est un ajustement par poussée sur la projection et/ou dans le retrait.

6. Etrier de frein selon la revendication 5, dans lequel le moyen élastique est un ajustement par poussée sur la projection ou dans le retrait et est monté dans une gorge de l'autre de la projection ou du retrait.

7. Etrier de frein selon la revendication 3 ou l'une quelconque des revendications 4 à 6 lorsqu'elles dépendent de la revendication 3, dans lequel le moyen élastique est un ressort ondulé (76).

8. Etrier de frein selon la revendication 1 ou 2, dans lequel la garniture de frein est attachée de manière amovible au piston par une broche s'engageant avec la garniture de frein et le piston et étant orientée radialement ou suivant la corde par rapport au piston.

9. Etrier de frein selon la revendication 8, dans lequel la broche est orientée suivant la corde par rapport au piston et s'engage avec une gorge circonférentielle dans le piston.

10. Etrier de frein selon l'une quelconque des revendications précédentes, dans lequel un moyen élastique agit entre l'étrier et la garniture de frein supplémentaire pour attacher de manière amovible la garniture de frein supplémentaire à l'étrier.

11. Etrier de frein selon l'une quelconque des revendications précédentes, dans lequel la garniture de frein supplémentaire est attachée de manière amovible à l'étrier par une broche s'engageant avec la garniture de frein et l'organe de faux-piston, et étant orientée radialement ou suivant la corde par rapport à l'organe de faux-piston.

12. Etrier de frein selon l'une quelconque des revendications précédentes, comportant un piston supplémentaire (75) dans lequel la garniture de frein est attachée au piston supplémentaire de manière amovible.

13. Etrier de frein selon la revendication 12, dans lequel une garniture de frein supplémentaire est attachée de manière amovible à un autre organe de faux-piston.
